Europäisches Patentamt

European Patent Office

Office européen des brevets

(19)

(11) Veröffentlichungsnummer : **0 019 874**
**B1**

## (12) EUROPÄISCHE PATENTSCHRIFT

(45) Veröffentlichungstag der Patentschrift :
24.08.83

(21) Anmeldenummer : 80102882.0

(22) Anmeldetag : 23.05.80

(51) Int. Cl.³ : **B 23 B 31/26**, B 23 B 29/034,
B 23 Q 11/10

(54) Bohreinheit.

(30) Priorität : 30.05.79 DE 2921961

(43) Veröffentlichungstag der Anmeldung :
10.12.80 Patentblatt 80/25

(45) Bekanntmachung des Hinweises auf die Patenterteilung : 24.08.83 Patentblatt 83/34

(84) Benannte Vertragsstaaten :
FR GB IT SE

(56) Entgegenhaltungen :
DE A 1 913 231
FR A 2 150 368
FR A 2 289 295
GB A 1 379 194
US A 3 583 280
US A 3 613 192

WERKSTATT UND BESTRIEN, Band 112, Nr. 11,
November 1979, B. BELLMANN et al. : « Bearbeitungssystem mit Mess- und Regelkreisen für
Kurzbohrer mit Hartmetall-Wendeschneidplatten », Herausgegeben vom Carl Hanser Verlag
München

(73) Patentinhaber : Santrade Ltd.
Hirschmattstrasse 26
CH-6002 Luzern (CH)

(72) Erfinder : Bellmann, Bernhard Günter, Dr.-Ing.
Moselstrasse 7
D-6102 Pfungstadt (DE)
Erfinder : Horsch, Wilfried
Pfaffenklinge 10
D-6951 Obrigheim (DE)
Erfinder : Wolf, Wilhelm, Dr.-Ing.
Am Holderbusch 4
D-6941 Laudenbach (DE)

(74) Vertreter : Katscher, Helmut, Dipl.-Ing.
Bismarckstrasse 20
D-6100 Darmstadt (DE)

Bohreinheit

Die Erfindung betrifft eine Bohreinheit mit einer drehangetriebenen durchbohrten Werkzeugspindel zur auswechselbaren Aufnahme eines Bohrwerkzeugs in einem quer zur Werkzeugspindelachse schwenkbaren Werkzeugträger, der sich mit einem Stützarm auf eine schwach geneigte Keilfläche eines mittels einer Schubstange in der Werkzeugspindel axial verschiebbaren Verstellkörpers abstützt.

Bei einer derartigen bekannten Bohreinheit (DE-A-2 040 020) ist das Bohrwerkzeug an der Stirnfläche des Werkzeugträgers angeschraubt und zentriert, der zugleich als Werkzeugaufnahme dient. Zum Auswechseln muß das Bohrwerkzeug vom Werkzeugträger abgeschraubt werden. Ein schneller oder sogar vollautomatischer Werkzeugwechsel ist hierbei nicht möglich.

Bei bekannten vollautomatischen Werkzeugwechseleinrichtungen ist das Werkzeug mit einem Kegelzapfen versehen, der in einer konischen Aufnahmebohrung mittels eines am Kegelzapfen angebrachten Kopfbolzens gespannt wird. Kranzförmig angeordnete Kugeln, die durch einen Spannkäfig axial entlang einer in der Spindelbohrung angeordneten Schrägfläche bewegbar sind, ziehen den Kopfbolzen nach innen, wenn der Spannkäfig unter der Wirkung einer Spannfeder nach hinten gezogen wird. Zum Lösen dieser Kopfbolzenspannung wird der Spannkäfig mittels einer in der durchbohrten Spindel angeordneten Spannstange nach vorn bewegt, bis die Kugeln den Bolzenkopf freigeben.

Kopfbolzenspannungen sind an sich bekannt (GB-A-1 379 194). Diese bekannte Einrichtung trägt einen Wendelbohrer. Im Gegensatz zu einer Bohrstange stellt sich bei derartigen Wendelbohrern das Problem einer radialen Verstellung nicht. Eine radiale Verstellung der Werkzeuge wäre bei diesen bekannten Einrichtungen technisch unsinnig und wird deshalb dort auch nicht ausgeführt.

Bei dieser bekannten Kopfbolzenspannung wird der in der Spindelbohrung zur Verfügung stehende Raum für die Teile der Kopfbolzenspannung benötigt ; bei der eingangs erwähnten bekannten Bohreinheit wird die Spindelbohrung zur Aufnahme des Stützarms, des axial verschiebbaren Verstellkörpers und der damit verbundenen Schubstange benötigt, um die gewünschte Schwenkbewegung des Bohrwerkzeugs erzielen zu können. Für die auswechselbare Anbringung des Bohrwerkzeugs am Werkzeugträger steht dabei nur die Stirnfläche zur Verfügung.

Bei einer anderen bekannten Bohreinheit (US-A-3 613 192) ist eine Bohrstange einerseits radial verstellbar und kann andererseits durch Betätigung einer zentralen Schubstange in ähnlicher Weise wie bei einer Kugel-Kopfbolzenspannung gespannt werden. In einer Werkzeugspindel ist eine Bohrstange auswechselbar angeordnet. Zum Auswechseln muß eine Schubstange gegen die Kraft von Federn mittels eines Hydraulikkolbens axial nach vorne bewegt und dabei durch eine Kurvenführung um ihre Längsachse gedreht werden, um ein Vielkeilprofil außer Eingriff mit der Bohrstange zu bringen.

Um eine radiale Verstellung des Bohrwerkzeugs zu erreichen, ist die Werkzeugspindel drehbar in einer exzentrischen Buchse angeordnet. Im normalen Betrieb dreht sich die Werkzeugspindel zusammen mit der exzentrischen Hülse. Wenn in einem Differentialgetriebe eine Drehbewegung überlagert wird, dreht sich die exzentrische Hülse relativ zu der Werkzeugspindel, so daß sich die radiale Stellung des Bohrwerkzeugs verändert. Hierbei handelt es sich um eine sogenannte Exzenterspindel, bei der für die radiale Werkzeugverstellung ein verhältnismäßig großer Getriebeaufwand erforderlich ist.

Bekannt ist auch die Kühlmittelzufuhr durch eine zentrale Bohrung, wobei die durchbohrten Teile teleskopartig ineinandergreifen (DE-A-1 913 231).

Aufgabe der Erfindung ist es daher, eine Bohreinheit der eingangs genannten Art so auszubilden, daß ein vollautomatischer Werkzeugwechsel erfolgen kann, ohne daß die Schwenkbewegung des Bohrwerkzeugs beeinträchtigt oder für das Lösen bzw. Spannen des Werkzeugs ein Eingriff am vorderen Spindelende notwendig wäre.

Diese Aufgabe wird erfindungsgemäß dadurch gelöst, daß das Bohrwerkzeug im Werkzeugträger mittels einer Kopfbolzenspannung durch Kugeln spannbar ist, die durch einen in einer Bohrung des Stützarms axial verschiebbaren Spannkäfig entlang einer Schrägfläche, wie bei Werkzeugwechseleinrichtungen bekannt, bewegbar sind, und daß die Schubstange am Ende ihres den Verstellkörper und den Werkzeugträger schwenkenden Axialhubs über einen Anschlag mit dem durch Spannfedern in seiner Spannstellung gehaltenen Spannkäfig in Eingriff tritt und diesen zur Freigabe des Kopfbolzens axial verschiebt.

Die Teile der Kopfbolzenspannung sind dabei im Inneren des Stützarmes untergebracht. Für die Betätigung der Kopfbolzenspannung wird die Schubstange verwendet, die auch den mit der Keilfläche versehenen Verstellkörper axial verschiebt. Am Ende ihres Verstellhubes kann die Schubstange über einen Anschlag mit dem Spannkäfig der Kopfbolzenspannung in Eingriff gebracht werden, um die Kopfbolzenspannung zu lösen. Wenn dieser Eingriff wieder gelöst wird, wird der Kopfbolzen wieder gespannt. Auf diese Weise läßt sich auch bei einer Bohreinheit mit zur radialen Verstellung der Schneide schwenkbarem Bohrwerkzeug ein vollautomatischer Werkzeugwechsel erreichen, wobei sogar noch eine gesonderte Betätigungseinrichtung für das Lösen des Werkzeugs entfällt. Für den Spann- oder Lösevorgang des Bohrwerkzeugs ist kein Eingriff an dem vorderen Spindelende erforderlich, was zeitraubend und umständlich wäre. Am vorderen Spindelende wird nur das zu wechselnde Bohrwerkzeug erfaßt und herausgenommen und ein anderes Bohrwerkzeug eingesetzt.

Wegen des sehr geringen Platzbedarfs der erfindungsgemäß für die Werkzeugspannung benötigten Teile ist es in konstruktiv sehr einfacher Weise möglich, in der Schubstange und in den weiteren, sich bis zum Bohrwerkzeug anschließenden Teilen eine zentrale Kühlmittelleitung vorzusehen.

Weitere Ausgestaltungen des Erfindungsgedankens sind Gegenstand von Unteransprüchen.

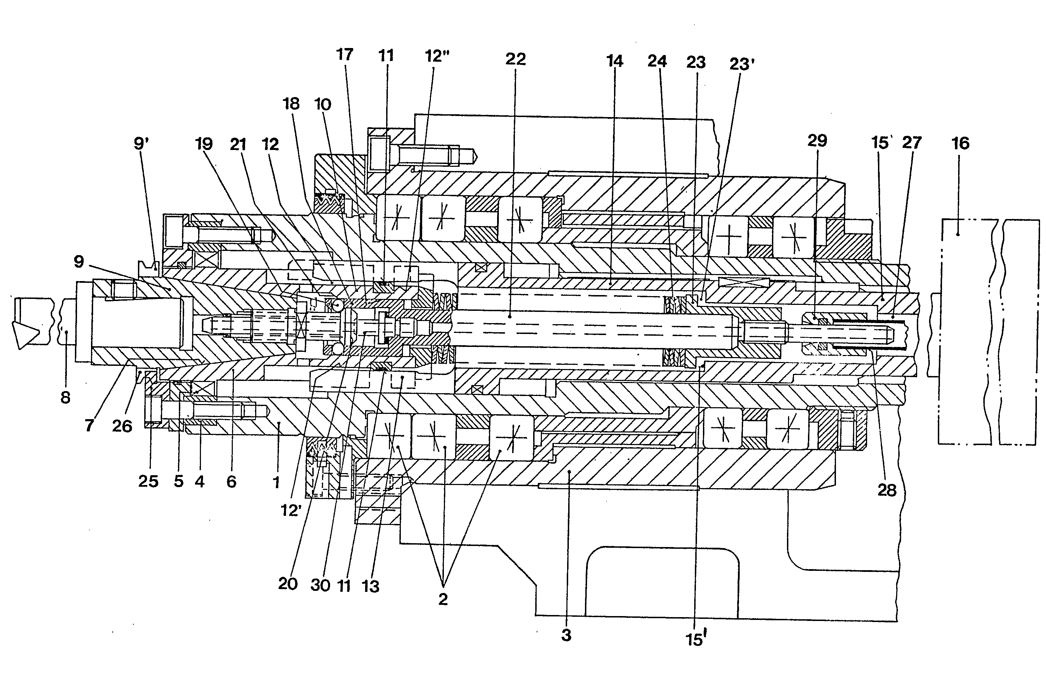

Die Erfindung wird nachfolgend an einem Ausführungsbeispiel, das in der Zeichnung dargestellt ist, näher erläutert.

Die Zeichnung zeigt einen Teil-Längsschnitt durch eine Bohreinheit. Eine durchbohrte Werkzeugspindel 1 ist über Spindellager 2 in einem Spindelgehäuse 3 drehbar gelagert. Ein am hinteren Ende der Werkzeugspindel 1 angreifender Drehantrieb ist in der Zeichnung nicht dargestellt.

Am vorderen Spindelende ist ein Tragring 4 angeflanscht, der über zwei gegenüberliegende (in der Zeichnung um 90° in der Zeichenebene gelegte) Drehstabfedern 5 mit einem Werkzeugträger 6 verbunden ist, der eine konische Werkzeugaufnahmebohrung 7 aufweist. In der Werkzeugaufnahmebohrung 7 sitzt ein mit einem Bohrwerkzeug 8 verbundener Kegelzapfen 9. Der Werkzeugträger 6 ist mit einem Stützarm 10 einstückig ausgeführt, der sich über Gleitkörper 11 an zwei einander gegenüberliegenden Keilflächen 12, 12' abstützt.

Die Keilflächen 12, 12' sind gegenüber der Spindellängsachse schwach geneigt, beispielsweise in einem Winkel von 1°, und sind an einem gabelförmigen Verstellkörper 13 ausgebildet, der im Inneren der Spindel 1 längsverschiebbar geführt ist. Der Verstellkörper 13 weist einen rohrförmigen Fortsatz 14 auf, der mit einer rohrförmigen Schubstange 15 verbunden ist, die sich durch die Spindel 1 erstreckt und außerhalb des hinteren Spindelendes mit einer in der Zeichnung nur angedeuteten Verstelleinrichtung 16 verbunden ist, durch die die Schubstange 15 zwischen genau vorgebbaren axialen Stellungen positionierbar ist.

Die Axialverschiebung des Verstellkörpers 13 dient dazu, den Werkzeugträger 6 um die Drehstabfedern 5 zu schwenken und dadurch eine radiale Verstellung der Schneidspitze des Bohrwerkzeugs 8 vorzunehmen, beispielsweise wie folgt :

Wenn der Verstellkörper 13 aus seiner in der Zeichnung dargestellten Ausgangsstellung nach hinten bewegt wird, d. h. in der Zeichnung nach rechts, schwenkt der Werkzeugträger 6 um die Drehstabfedern 5 entgegen dem Uhrzeigersinn, so daß die Schneidspitze des Bohrwerkzeugs 8 in die für den Bohrvorgang erforderliche radiale Stellung gebracht wird. Wenn der Bohrvorgang beendet ist, wird der Verstellkörper 13 durch die Schubstange 15 wieder nach vorn in die in der Zeichnung gezeigte Ausgangsstellung gefahren, wobei die Schneidspitze des Bohrwerkzeugs 8 für die Rückzugbewegung von der bearbeiteten Fläche abgehoben wird.

Statt dessen kann das Bohrwerkzeug 8 auch so ausgeführt sein, daß es in der in der Zeichnung gezeigten Stellung in das volle Material bohrt oder eine Schruppbearbeitung der Bohrung vornimmt. Am Ende dieses Bearbeitungsvorgangs wird der Werkzeugträger 6 durch ein Zurückziehen des Verstellkörpers 13 geschwenkt, wobei die Schneidspitze des Bohrwerkzeugs radial nach außen verstellt wird. In dieser Stellung erfolgt bei der Rückzugbewegung eine Feinbearbeitung der Bohrung.

Diese beschriebene Schwenkung des Werkzeugträgers 6 mit dem Bohrwerkzeug 8 erfolgt bei der Bearbeitung jeder Bohrung, d. h. oftmals nacheinander, ohne daß das Bohrwerkzeug gewechselt wird. Durch die axiale Positionierung des Verstellkörpers 13 kann dabei die radiale Einstellung des Bohrwerkzeugs so beeinflußt werden, daß ein bei der Bearbeitung auftretender, gemessener oder vorgegebener Schneidenverschleiß des Bohrwerkzeugs kompensiert wird.

In einer Bohrung 17 des Stützarmes 10 ist ein Spannkäfig 18 axial verschiebbar, der einen Kranz von Spannkugeln 19 aufnimmt, die in der in der Zeichnung dargestellten, gespannten Stellung einen Kopfbolzen 20 halten, der mit dem hinteren Ende des Kegelzapfens 9 verbunden ist. Bei einer Axialbewegung des Spannkäfigs 18 nach vorn werden die Kugeln 19 an einer ringförmigen Schrägfläche 21 entlangbewegt und können sich dabei so weit radial nach außen bewegen, daß sie den Kopfbolzen 20 freigeben.

Der Spannkäfig 18 ist mit einer axialen Spannstange 22 verbunden, die an ihrem hinteren Ende ein Federwiderlager 23 aufweist, an dem sich eine Spannfeder 24 in Form eines Tellerfederpakets abstützt, die sich andererseits am hinteren Ende des Stützarms 10 abstützt. Die Spannfeder 24 zieht die Spannstange 22 und damit den Spannkäfig 18, die Kugeln 19 und den Kopfbolzen 20 nach hinten und hält so den Kegelzapfen 9 in der konischen Aufnahmebohrung 7.

Wenn das Bohrwerkzeug 8 gewechselt werden soll, beispielsweise weil nach der Bearbeitung vieler Bohrungen der Schneidenverschleiß zu groß geworden ist oder weil ein anderes Bohrwerkzeug zum Einsatz kommen soll, wird die Schubstange 15 über ihre in der Zeichnung dargestellte Axialstellung hinaus nach vorn verfahren. Die Schubstange 15 tritt an ihrer Stirnfläche 15' mit einer hinteren Anschlagfläche 23' des Federwiderlagers 23 in Eingriff und verschiebt die Spannstange 22 gegen die Kraft der Feder 24 nach vorn, um den Kopfbolzen 20 freizugeben.

Die Keilfläche 12 geht an ihrem hinteren Ende in eine achsparallele Fläche 12'' über. Wenn die Flächen 15' und 23' in Eingriff treten, befindet sich der obere Gleitkörper 11 des Stützarms 10 im Bereich der Fläche 12". Bei einer weiteren Axialbewegung der Schubstange 15 nach vorn wird der Stützarm 11 und damit das Bohrwerkzeug 8 nicht weiter geschwenkt; diese weitere Axialbewegung der Schubstange 15 dient nur dazu, den Spannkäfig 18 zur Freigabe des Kopfbolzens 20 zu verschieben, so daß das Bohrwerkzeug 8 mit seinem Kegelzapfen 9 und dem Kopfbolzen 20 durch eine Werkzeugwechseleinrichtung an einem Flansch 9' ergriffen und ausgewechselt werden kann.

Der Werkzeugwechsel erfolgt bei Stillstand der Werkzeugspindel 1 in einer vorgegebenen festen Drehstellung damit das Bohrwerkzeug immer in der gleichen Stellung seiner Schneide zu den Keilflächen 12, 12' bzw. den Drehstabfedern 5 eingesetzt wird. An der Stirnseite der Werkzeugspindel 1 ist ein Mitnehmerstein 25 angebracht, der in einer Ausnehmung 26 am Flansch 9' greift.

Die Schubstange 15 enthält in einer Bohrung 27 ein Kühlmittelrohr 28, das an einer teleskopartigen Leitungsverbindungen 29 mit der durchbohrten Spannstange 22 verbunden ist. Über eine weitere, teleskopartige Leitungsverbindung 30 ist die Schubstange 22 mit dem Kopfbolzen 20 verbunden, der ebenso wie der Kegelzapfen 9 und das Bohrwerkzeug 8 eine zentrale Längsbohrung aufweist. Auf diese Weise wird eine durchgehende Kühlmittelleitung gebildet, die sich bis in das Bohrwerkzeug 8 hinein erstreckt.

**Ansprüche**

1. Bohreinheit mit einer drehangetriebenen durchbohrten Werkzeugspindel (1) zur auswechselbaren Aufnahme eines Bohrwerkzeugs (8) in einem quer zur Werkzeugspindelachse schwenkbaren Werkzeugträger (6), der sich mit einem Stützarm (10) auf eine schwach geneigte Keilfläche (12) eines mittels einer Schubstange (15) in der Werkzeugspindel (1) axial verschiebbaren Verstellkörpers (13) abstützt, dadurch gekennzeichnet, daß das Bohrwerkzeug (8) im Werkzeugträger (6) mittels einer Kopfbolzenspannung (18, 19, 20) durch Kugeln (19) spannbar ist, die durch einen in einer Bohrung (17) des Stützarms (10) axial verschiebbaren Spannkäfig (18) entlang einer Schrägfläche (21), wie bei Werkzeugwechseleinrichtungen bekannt, bewegbar sind, und daß die Schubstange (15) am Ende ihres den Verstellkörper (13) verschiebenden und den Werkzeugträger (6) schwenkenden Axialhubs über einen Anschlag (15', 23') mit dem durch eine Spannfeder (24) in seiner Spannstellung gehaltenen Spannkäfig (18) in Eingriff tritt und diesen zur Freigabe des Kopfbolzens (20) axial verschiebt.

2. Bohreinheit nach Anspruch 1, dadurch gekennzeichnet, daß der Spannkäfig (18) mit einer axialen Spannstange (22) verbunden ist, auf der die Spannfeder (24) angeordnet ist, die sich an ihrem einen Ende am Stützarm (10) und am anderen Ende an einem mit der Spannstange (22) verbundenen Federwiderlager (23) abstützt, das zugleich den Anschlag (23') für die Schubstange (15) bildet.

3. Bohreinheit nach Anspruch 1, dadurch gekennzeichnet, daß die Steigung der Keilfläche (12, 12') so gerichtet ist, daß das Bohrwerkzeug (8) bei einer Axialbewegung des Verstellkörpers (13) zum Bohrwerkzeug (8) hin radial nach innen bewegt wird.

4. Bohreinheit nach Anspruch 1, dadurch gekennzeichnet, daß die Keilfläche (12) an dem Ende, das der Stützarm (10) während Axialverschiebung des Spannkäfigs (18) berührt, in eine achsparallele Fläche (12") übergeht.

5. Bohreinheit nach Anspruch 4, dadurch gekennzeichnet, daß sich der Stützarm (10) zwischen zwei gegenüberliegenden, parallelen Keilflächen (12, 12') des Verstellkörpers (13) abstützt und daß die achsparallele Fläche (12") nur an einer der beiden Keilflächen (12) vorgesehen ist.

6. Bohreinheit nach Anspruch 1, dadurch gekennzeichnet, daß die Schubstange (15), die Spannstange (22), der Kopfbolzen (20) und das Bohrwerkzeug (8) zur Aufnahme einer Kühlmittelleitung durchbohrt sind.

7. Bohreinheit nach Anspruch 6, dadurch gekennzeichnet, daß zwischen einem in der Schubstange (15) angeordneten Kühlmittelrohr (28) und der Spannstange (22) sowie zwischen der Spannstange (22) und dem Kopfbolzen (20) jeweils eine teleskopartige Leitungsverbindung (29 bzw. 30) vorgesehen ist.

**Claims**

1. Boring unit with a rotatably driven, bored tool-spindle (1) for interchangeably accomodating a boring tool (8) in a tool carrier (6) slewable transversely to the tool-spindle axis, the tool carrier being supported with a support arm (10) on a slightly inclined wedge surface (12) of an adjusting body (13) axially displaceable in the tool spindle (1) by means of a connecting rod (15), characterised in that the boring tool (8) can be clamped in the tool carrier (6) by means of a headed-bolt chucking (18, 19, 20) by balls (19) which, through a clamping cage (18) axially displaceable in a bore (17) of the support arm (10), are movable along an inclined face (21), as is known in tool changing mechanisms, and in that at the end of the axial travel of the connecting rod (15) displacing the adjusting body (13) and slewing the tool carrier (6) the connecting rod comes into engagement via a stop member (15', 23') with the clamping cage (18) held in its clamping position by a clamping spring (24) and axially displaces the clamping cage so as to release the headed-bot (20).

2. Boring unit according to Claim 1, characterised in that the clamping cage (18) is connected to an axial clamping rod (22) on which the clamping spring (24) is arranged, which at one end bears against the support arm (10) and at the other end bears against a spring abutment (23) which is connected to the clamping rod (22) and which simultaneously forms the stop member (23') for the connecting rod (15).

3. Boring unit according to Claim 1, characterised in that the inclination of the wedge face (12, 12') is so directed that the boring tool (8) is moved radially inwards upon axial movement of the adjusting body (13) towards the boring tool (8).

4. Boring unit according to Claim 1, characterised in that the wedge face (12) under goes a transition into an axially parallel surface (12") at the end which contacts the bracket (10) during the axial displacement of the clamping cage (18).

5. Boring unit according to Claim 4, characterised in that the bracket (10) is supported between two opposed, parallel wedge faces (12, 12') of the adjusting body (13) and in that the axially parallel face (12") is provided only for one of the two wedge faces (12).

6. Boring unit according to Claim 1, characterised in that the connecting rod (15), the clamping rod (22), the headed-bolt (20) and the boring tool (8) are through-bored so as to accommodate a coolant duct.

7. Boring unit according to Claim 6, characterised in that between a coolant pipe (28) arranged in the connecting rod (15) and the clamping rod (22), as well as between the clamping rod (22) and the headed-bolt (20) there is provided respectively a telescopic duct connection (29 and 30).

**Revendications**

1. Unité de forage comportant une broche (1) creuse entraînée en rotation permettant de loger de manière échangeable un outil de forage (8) dans un porte-outil (6) pouvant basculer transversalement à l'axe de la broche, le porte-outil reposant avec un bras-support (10) sur une surface en coin faiblement inclinée d'un élément de réglage pouvant être déplacé axialement à l'intérieur de la broche (1) au moyen d'un poussoir (15), caractérisée en ce que l'outil de forage (8) peut être serré dans le porte-outil (6) au moyen d'un serrage par boulon en tête (18, 19, 20) et par des billes (19) qui peuvent être déplacées par une cage de serrage (18) déplaçable axialement dans un alésage du bras-support (10) le long d'une surface inclinée (21), comme on le connaît pour les dispositifs d'échange d'outils, en ce que le poussoir (15) engrène, au moyen d'un taquet (15', 23') dans la cage de serrage (18) maintenue en position de serrage par un ressort de rappel (24) à l'extrémité de la course axiale qui fait déplacer l'élément de réglage (13) et pivoter le porte-outil (6) et en ce qu'il déplace axialement ladite cage (18) pour libérer le boulon en tête (20).

2. Unité de forage suivant la revendication 1, caractérisée en ce que la cage de serrage (18) est reliée à une tige de tension (22) sur laquelle est disposé le ressort de rappel (24) qui s'appuie d'un côté au bras-support (10) et de l'autre côté à une butée (23) reliée à la tige de tension (22), cette butée (23) formant en même temps le taquet (23') pour le poussoir (15).

3. Unité de forage suivant la revendication 1, caractérisée en ce que l'inclinaison de la surface en coin (12, 12') est orientée de telle sorte que l'outil de forage (8) est déplacé radialement vers l'intérieur lors d'un mouvement axial de l'élément de réglage (13) vers l'outil (8).

4. Unité de forage suivant la revendication 1, caractérisée en ce que la surface en coin (12) se transforme en une surface (12') parallèle à l'axe, à l'extrémité touchée par le bras-support (10) pendant le déplacement axial de la cage de serrage (18).

5. Unité suivant la revendication 4, caractérisée en ce que le bras-support (10) s'appuie entre deux surfaces en coin (12, 12') parallèles situées l'une en face de l'autre, appartenant à l'élément de réglage (12), et en ce que la surface (12") parallèle à l'axe n'est prévue qu'à une des deux surfaces en coin (12).

6. Unité suivant la revendication 1, caractérisée en ce que le poussoir (15), la tige de tension (22), le boulon (20) et l'outil de forage (8) sont percées pour recevoir un conduit pour réfrigérant.

7. Unité suivant la revendication 6, caractérisée en ce qu'un raccordement télescopique (29 ou 30) est prévu, respectivement, entre un conduit de réfrigérant (28) disposé dans le poussoir (15) et la tige de tension (22) ainsi qu'entre la tige de tension (22) et le boulon en tête (20).

**0 019 874**